# EUROPEAN PATENT SPECIFICATION

(11) **EP 4 352 414 B1**
(45) Date of publication and mention of the grant of the patent: **01.04.2026**
(21) Application number: 22730558.8
(22) Date of filing: 31.05.2022
(51) Int. Cl.: F23N 1/02, F23N 5/08, F23N 5/10

(54) **METHOD FOR CONTROLLING THE OPERATION OF A GAS BOILER**
VERFAHREN ZUR STEUERUNG DES BETRIEBS EINES GASKESSELS
PROCÉDÉ DE COMMANDE DE FONCTIONNEMENT DE CHAUDIÈRE À GAZ

(30) Priority: 11.06.2021 EP 21179106
(43) Date of publication of application: 17.04.2024
(73) Proprietor: BDR Thermea Group B.V., 7332 BD Apeldoorn (NL)
(72) Inventor: PISONI, Andrea, 7332 BD Apeldoorn (NL); TEMPERATO, Sebastiano, 7332 BD Apeldoorn (NL); RUTGERS, Job, 7332 BD Apeldoorn (NL)
(74) Representative: Grabovac, Dalibor
(86) International application number: PCT/EP2022/064664
(87) International publication number: WO 2022/258421

(56) References cited:
- WO-A1-2018/216331
- WO-A1-2021/078949
- US-A1- 2019 376 828

## Description

The invention relates to a method for controlling a hydrogen gas boiler. Additionally, the invention relates to a control unit performing said method and a hydrogen gas boiler comprising said control unit. Furthermore, the invention relates to a corresponding computer program product implementing the steps of said method.

Gas boilers combust gas fuel to heat water for domestic use and/or central heating system facilities in buildings. The boilers can be used to operate in different modes, such as continuous-flow heaters, for preparing hot water, etc. To improve the efficiency, boilers implement a so-called modulation operating modus. In this way, in case the heating demand for a facility is less than the capacity of the boiler, the boiler is able to modulate seamlessly between a fixed low fire rate and a high fire rate without the need of excessive boiler cycles of switching-off and switching-on. In the respective operating states, different requirements in terms of heat demand can be set in the equipment.

In gas boilers, the power output is substantially determined by the setting of the supply of fuel gas and air and by the mixture ratio between gas and air that is set. The temperature produced by the flame is also, among other things, a function of the mix ratio between fuel gas and air. An important factor influencing the safety of the boiler, is the flame or burner stability, which is defined in terms of a stable combustion and thus no or next to no occurrence of flashbacks.

The flame speed is an important factor on the flame stability and a high flame speed can cause a flashback. In case the flame speed becomes greater than the mixture velocity, the flame can traverse in the upstream direction, which is toward the burner deck and even across the burner deck into the burner causing a so-called flashback. Flashback can be triggered e.g. by a change in a ratio of the air to the fuel gas in the mixture, by a change in composition of the fuel gas. When the mixture velocity becomes too high and rises above a so- called blow-off speed, blow-off may occur which means that the flame is blown-off the burner deck, with the consequence that the flame extinguishes or suffers incomplete combustion. For this reasons, the mixture velocity and/or the flame speed needs to be controlled. The flame speed is a function of the ratio of air to fuel gas in the mixture (in the following this ratio can also be indicated as lambda). Around lambda 1 the flame speed is the highest and if lambda increases the flame speed decreases.

The control of mixture velocity is much more important when the boiler uses hydrogen as fuel gas rather than other fuel gasses such as methane. In fact, flashback can occur more easily in hydrogen boilers since the laminar flame speed of hydrogen air mixture is around seven times higher than the flame speed for methane air mixture. It is therefore desirable to provide a method for controlling the operation of a gas boiler, in particular of a hydrogen boiler, during a change of power to avoid risky situations of flashback.

EP 3 290 799 A1 is directed to an air/gas admittance device for a combustion appliance. The air/gas admittance device is configured to provide a more uniform gas and/or air flow. This reduces noise in pressure and/or flow sensor measurements that are used by a gas valve controller to control the air/fuel ratio to the combustion appliance, thereby improving the efficiency and/or emissions of the combustion appliance. EP 3 290 799 A1 discloses an air/gas admittance device for use with a combustion unit, the air/gas admittance device comprising: a body having a side wall defining a passageway that extends from an air inlet to an air/gas outlet; a gas pipe having a side wall defining a passageway that extends from a gas inlet to a gas outlet; the side wall of the body having a gas pipe opening that is in fluid communication with the gas outlet of the gas pipe; an air flow restrictor positioned in the body between the gas pipe opening and the air inlet; a gas flow restrictor positioned in the gas pipe downstream of the gas inlet; a first pressure port in the side wall of the body, upstream of the gas pipe opening, the first pressure port configured to be operatively coupled to a first pressure sensor for measuring a pressure of air within the body; a second pressure port in the side wall of the gas pipe, the second pressure port configured to be operatively coupled to a second pressure sensor for measuring a pressure of gas within the gas pipe; and an air flow smoothing insert positioned in the body upstream of the first pressure port to achieve that readings are stable and free from oscillations and/or other noise caused by turbulent and/or non-uniform air and/or gas flows.

WO 2020/197391 A1 is directed to a method for operating a premix gas burner, wherein an air flow rate and/or a fuel gas flow rate are controlled so as to generate heat with the premix burner in accordance with a heat demand related value. The fuel gas comprises hydrogen and the method further provides a desired air excess factor relation of the air/fuel gas mixture which defines the relation between a desired air excess factor and an input variable like the heat demand related value, an air flow rate related value, or a fuel gas flow rate related value. The desired air excess factor is not a constant factor but varies for different input variable values. The fuel gas flow rate and/or the air flow rate are controlled such that an actual air excess factor converges towards the desired air excess factor while meeting the heat demand.

US 4,576,570 A is directed to a method and apparatus for controlling the combustion of multiple fuels, especially fuels having diverse combustion air requirements. A heating rate demand signal indicative of the heating rate desired is generated and is compared with a fuel based fuel heating rate signal. The larger of the two signals is selected to be an air demand signal that serves as set point for a combustion air controller. The flow rates of each of the fuels being burned is monitored and the resulting signals are scaled and summed to produce the heating rate signal. The fuel signals are also scaled by factors reflecting the combustion air requirements of the fuels. The signals are summed and combined with the fuel heating rate signal to produce a feedforward signal which in turn is combined with a signal reflecting the measured combustion air flow to produce an equivalent air heating rate signal. This latter signal is communicated to the combustion air controller and if different than the air demand signal causes an adjustment of the combustion air controller. The equivalent air signal is also compared with the heat demand signal and the lower of these two signals is communicated to a fuel heating demand subsystem which controls the metering of the fuels.

US 4,588,372 A is directed to a gas burning furnace having a burner in which the premixed fuel/air ratio of the burned gas in the burner flame is measured by a flame rod sensing the ionization current. The flame rod is connected to a fuel/air controller which controls the gas and primary air to the burner to maintain the maximum flame ionization current which results in an excessive amount of gas to the burner. The secondary air to the combustion chamber is proportionally controlled to add sufficient oxidant to the gas combustion in the combustion chamber to ensure complete combustion.

EP 3 043 115 B1 is directed to a method for operating a premix gas burner, wherein during burner-on phases a defined gas/air mixture having a defined mixing ratio of gas and air is provided to a burner chamber of the gas burner for combusting the defined gas/air mixture within the burner chamber. The defined gas/air mixture is provided by a mixing device mixing an air flow provided by an air duct with a gas flow provided by a gas duct. The air flow provided by the air duct depends on a fan speed of a fan assigned to the air duct or the burner chamber or an exhaust duct. The gas flow provided by the gas duct depends on a position of at least one gas valve assigned to the gas duct. Flames resulting from the combustion of the defined gas/air mixture within the burner chamber are monitored by an ionization sensor. Exhaust gas resulting from the combustion of the defined gas/air mixture within the burner chamber leaves the burner chamber though the exhaust duct of the burner chamber to which a temperature sensor is assigned. During burner-on phases a pre-purge-check and an ignition-check and a flue-check and a running-check and a gas-pressure-check and a post-purge-check are executable by monitoring and analysing an ionization signal of the ionization sensor and/or a signal being indicative of a power consumption of the fan and/or a fan speed signal of the fan and/or an exhaust gas temperature signal of the temperature sensor in order to detect a potential blockage within the gas burner, wherein the combustion in the gas burner is stopped or will be brought to a level where the combustion is hygienic if a potential blockage within the gas burner is detected.

US 7,241,135 B2 is directed to a modulating gas burner control system using closed loop feedback from a flame rod which provides a signal that varies with gas pressure and which provides combustion air fan control to accurately control the heat from the system without use of expensive control valves.

The documents that are discussed above disclose complex devices, systems and methods which are complex to implement and which are not specifically configured to avoid flashback in case of or during a change of power in a gas boiler, in particular in a boiler combusting hydrogen.

The object of the invention is therefore to provide an easy to configure and implement method for controlling the operation of a hydrogen gas boiler that is efficient in preventing flashback in case of or during a change of power in a hydrogen gas boiler.

The object is solved by a method for controlling a hydrogen gas boiler, the method comprising:
acquiring a heat change demand;
switching the gas boiler into a modulation operating modus due to the acquired heat change demand; and
controlling one or more actuators of the boiler to regulate an air flow and/or a fuel gas flow, the fuel gas comprising at least 20 mol%, in particular 21 mol%, of hydrogen,
wherein controlling the one or more actuators is such that during the modulation operating modus an air to fuel gas ratio of a mixture is increased, wherein
wherein, during the modulation operating modus, the value of the fuel gas flow is dependent on the value of the air flow according to a predefined function, and the quantity of air and the quantity of fuel gas change according to said predefined function.

It is noted that after acquiring a change in the heat demand, i.e. a reduction or an increase in a heat demand of a boiler, the method switches into the modulation operating modus. As is discussed below the heat demand change can also result from a situation in which the gas boiler is not operated and, therefore, it firstly has to be ignited. Additionally, the heat demand change can also lead to a shutdown of the gas boiler. In both situations the gas boiler is operated in the modulation operating modus.

With "modulation operating modus" is intended an operating modus or state of the boiler, wherein the boiler can change the power output of the burner as a consequence of a variation in the heat demand. When the heating needs for a facility connected to the boiler are below the capacity of the boiler, the boiler not using a modulation operating modus would undergo cycling where they would activate, satisfy the load and then deactivate. The greater the difference between the heating load and the burner output, the greater the number of boiler cycles. This produces cycle losses and add general wear of the equipment. By using the modulation operating modus, the boiler comprises units with multiple firing rates or multiple staged firing followed by units that can modulate between a low and high fire rate. On fan-equipped boilers, modulation is accomplished by varying the air and gas flow into the boiler.

In a modulation operating mode the boiler's power output is modulated between a minimum output value and a maximum output value, wherein the minimum output value is greater than 0kW. In particular, a modulation ratio is defined as the ratio between the minimum output value and the maximum output value and represents the boiler's ability to reduce its maximum output to its minimum output, in line with system demand. A wide modulation ratio (for example 1:10) reduces constant on/off cycling which can improve efficiency and boiler longevity.

The modulation operating mode can depend on the boiler water temperature. That means, the modulation operating mode can be carried out such that the boiler water temperature corresponds to a target boiler water temperature or is within a predetermined range around the target boiler temperature. In that case, the modulation operating mode is finished and the boiler can be operated in the non-modulation operating mode.

Accordingly, a non-modulation operating modus is intended an operating modus other than the modulation operating modus, i.e. the switch-on or switch-off modus, a pre purge cycle to remove any residual gases within a combustion chamber, or any operating modus when no heat change demand is acquired.

With the term "mixture" is intended a mixing composition of air and fuel gas, i.e. hydrogen, that is formed in the channel of the gas boiler and is conducted to the burner of the gas boiler for the combustion. The burner of the gas boiler can be operated between a minimum load and a full load. The ratio of the full load over the minimum load can be at least 4. An air to fuel gas ratio of a mixture supplied to the burner can be at low load less than 4, at full load less than 2, for both at a minimum 1.

The fuel gas can be hydrogen. In particular, the fuel gas can comprise at least 20 mol%, preferably at least 30 mol% or more of hydrogen, in particular fuel gas comprising at least 95 mol % hydrogen. The fuel gas can be pure hydrogen. Pure hydrogen is present if the fuel gas comprises at least 98 mol % hydrogen. Alternatively, the fuel gas can be a natural gas which produces carbon oxide as a by-product of the combustion.

An advantage of the method is that the flashback risk can be reduced. This is achieved by switching into the modulation operating modus in which the air to fuel gas ratio (in the following also indicated as lambda) is increased. That means, the air to fuel gas ratio is increased with respect to the air to fuel gas ratio present in the non-modulation operating mode. This increased air to fuel gas ratio is kept on the increased level during the modulation operating modus, in particular during the entire modulation operating modus. As mentioned above, in a modulation operating modus the boiler is continuously operating in response to an increase or decrease of heat demand so that the boiler's power output is modulated between a minimum output value and a maximum output value. As long as an increase or decrease of heat demand is present to maintain the output of the boiler within a modulation range (i.e., between a predefined minimum and maximum output value), the boiler is in the modulation modus. This occurs during an operating period of the boiler called modulation period, i.e. the time during which the boiler is switched into the modulation modus. During this modulation period, the air to fuel gas ratio is continuously maintained at a higher level compared to other operating periods, i.e., during other periods when the boiler's power output is not modulated between a minimum output value and a maximum output value in response to a change (an increase or decrease) of heat demand.

According to the invention it was realized that a lambda can get lower than a nominal lambda after a heat change demand is acquired and thus, the operational parameters are adapted to fulfil the demanded heated. In one example, the lambda value can decrease especially during decreasing heat demand if the air is reduced before the gas. As discussed above the flashback risk increases with decreasing lambda value so that it was realized that there is a high flashback risk during the modulation operating modus. The invention reduces this risk by changing the air to fuel gas ratio in the modulation operating modus in comparison to the non-modulation operating modus.

The method can be advantageously used for a hydrogen boiler. In fact, as mentioned above, the flame speed of hydrogen air mixture is much higher, around seven times, than the flame speed for other fuel gas air mixture, such as methane air mixture. Therefore, the method can efficiently be used to prevent flashback in hydrogen boilers. A hydrogen boiler is a boiler to which fuel gas is supplied that comprises at least 95 mol % hydrogen. In particular, pure hydrogen can be supplied to the hydrogen boiler.

According to one embodiment, the method can comprise maintaining the value of the air to fuel gas ratio of the mixture unchanged, in particular for a specific load of the burner of the gas boiler, when no heat change demand is acquired. In other words, during a period when no change of power of the boiler is requested, the ratio between air and fuel gas in the mixture is not varied, meaning that, even if an excess of air is present due to safety reasons, this excess of air remains constant in case of no heat change demand. However, as lambda is dependent on the load of the gas boiler, lambda can change with increasing or decreasing load demand.

In one advantageous embodiment, the method can further comprise increasing the air to fuel gas ratio of the mixture when the heat demand increases or decreases, during the modulation operating modus. In particular, the method comprises first, preferably progressively, increasing the air flow and then, preferably progressively, increasing the fuel gas flow, when the heat demand increases. Additionally or alternatively the method comprises first, preferably progressively, decreasing the fuel gas flow and then, preferably progressively, decreasing the air flow, when the heat demand decreases. In this way, the method can provide a, in particular progressive, increase of the quantity of air compared to the quantity of fuel gas during the modulation operating modus, i.e. during the heat change. This particular variation of the air to fuel gas ratio prevents the risk of flashback in this particular operating modus.

In an embodiment, the air to fuel gas ratio of the mixture (lambda) is preferably between 1 to 2. In particular, lambda is between 1.1, and 1.8. In an advantageous embodiment lambda is 1.5. The aforementioned lambdas are present when the gas boiler is operated in the non-modulation operating modus.

Lambda refers to the air-fuel ratio, which is the mass ratio of air to a solid, liquid, or gaseous fuel present in a combustion process. In this way, the boiler works in a condition, wherein the quantity of air is higher than the quantity of fuel gas. In particular, an air excess factor can be defined as the ratio of the actual air to fuel ratio of the mixture relative to the stoichiometric air to fuel ratio. An air excess factor smaller than 1 means that there is not enough air for all of the fuel gas to combust, which means fuel gas is wasted and exits via a flue channel not combusted or partially combusted. This decreases the efficiency of the central heating boiler. The same applies to very high values of lambda above 2 due to access amount of air and thus inefficient combustion. For a lambda of at least 1, the flame speed has to be controlled to avoid flashbacks. Accordingly, the value of the air to fuel gas ratio and consequently the value of lambda needs to be accurately selected to avoid flashback issues and also efficiency issues.

In particular, the method comprises setting the air to fuel gas ratio of the mixture in the modulation operating modus, at a higher value compared to the air to fuel gas ratio of the mixture in the non-modulation operating modus, wherein preferably the air to fuel gas ratio of the mixture in the modulation operating modus, is set at a value that is at least up to 30% above the air to fuel gas ratio of the mixture in the non-modulation operating modus. The air to fuel gas ratio values (lambda) of the mixture in the non-modulation operating modus are mentioned above. It has been verified that by increasing lambda during the modulation operating modus, the risk of flashback, especially when using hydrogen as fuel gas, is reduced.

By setting the air to fuel gas ratio of the mixture, the value of the gas flow is dependent on the value of the air flow. The value of the gas flow is dependent on the value of the air flow according to a predefined function. In particular, during the modulation operating modus, the quantity of air and the quantity of fuel gas change according to said predefined function. For example, this can be a linear function or any other suitable nonlinear function.

In particular, the modulation operating modus starts once an ignition of the boiler has occurred or during the occurrence of the ignition of the boiler. Specifically, once the ignition is completed, the operation of the boiler follows the modulation of the power based on a boiler temperature set point. The modulation operating modus can also start after occurrence of a non-modulation operating modus, in which no heat change demand is acquired.

Advantageously, the actuators can comprise at least a fan element. The fan element can be controlled by a control unit of the boiler, in particular by switching off/on the fan and by varying the fan speed. The air flow can be regulated by varying the speed of the fan element. In particular, the method can comprise increasing the value of the air to fuel gas ratio of the mixture in the modulation operating modus by increasing or decreasing the speed of the fan element. For the case that the heat demand increases, the fan speed is increased. However, for the heat demand decreases, the fan speed is decreased.

Advantageously, the actuators can comprise at least a gas valve. The fuel gas flow is regulated by acting on the gas valve. The gas valve can be controlled by a control unit of the boiler, in particular by closing and opening the valve. In particular, the method can comprise increasing the value of the air to fuel gas ratio of the mixture in the modulation operating modus by reducing the fuel gas flow. For example, the activation of the gas valve can be retarded to reduce the quantity of the fuel gas in the mixture. The gas valve can be an electronic valve.

In an advantageous embodiment the following operation is possible. If a heat demand change signal is acquired that indicates a lower load of the boiler and/or a lower heat demand, a control unit switches the gas boiler in the modulation operating modus. In said modus first the gas valve is closed or the fuel gas is lowered and afterwards the fan speed is reduced. This enables that lambda is increased in the modulation operating modus in comparison to the lambda in the non-modulating modus.

If a heat demand change signal is acquired that indicates a higher load of the boiler and/or a higher heat demand, the control unit switches the gas boiler in the modulation operating modus. In said modus first the fan speed is increased and afterwards the gas valve is opened or the fuel gas is increased. This enables that lambda is increased in the modulation operating modus in comparison to the lambda in the non-modulating modus.

In one embodiment, the method can comprise measuring the air flow and the fuel gas flow using an air gas flow sensor, in particular or an air mass flow sensor, and a fuel gas flow sensor, in particular a or gas mass low sensor, respectively. The method can also comprise measuring or determining the air to fuel gas ratio. Thereto, the method can use the aforementioned sensor and/or measure a flame and/or ionization signal. Additionally or alternatively an oxygen sensor can be used. The oxygen sensor can be located in the combustion chamber or a flue of the gas boiler. Additionally or alternatively the thermal conductivity of the gas can be measured. The temperature sensor or thermocouple for said measurement can be arranged in the combustion chamber and/or on the burner deck burner. Advantageously, lambda can be determined using the intensity of the UV signal.

In an advantageous embodiment, the air flow and the fuel gas flow are regulated based on a stored flow diagram. In particular, the actuators of the boiler can be actuated based on a stored flow diagram.

The method can further comprise switching back to a non-modulation operating modus, when the values of the air flow and the fuel gas flow correspond to expected values according to a stored flow diagram. It is noted that the control carried out by the method is always active as long as a heat demand change is present. When the values of the air flow and the fuel gas flow are stabilized or constant, meaning that they cover the expected stored values as mentioned above, the control is finished. The system can switch back to a non-modulation operating modus.

Additionally or alternatively, the gas boiler can comprise an oxygen sensor for measuring oxygen in the combustion chamber or in a flue gas. Furthermore, the gas boiler can comprise a sensor for measuring the thermal conductivity of the combusted gas, of an air gas flow and/or of a fuel gas flow and/or of a mixed gas and air flow. In an embodiment, the heat demand during the modulation operating modus can be based on boiler water temperature or domestic hot water. Thus, the boiler can be switched to the modulation operating modus when the water temperature shall be changed. Additionally, the boiler can be switched to the non-modulation operating modus when the heat demand is fulfilled, in particular when the water temperature is achieved. In some embodiments that the heat demand refers to another parameter than the water temperature.

According to a further embodiment, the method can comprise detecting a flame signal in the combustion chamber of the boiler using preferably a UV sensor. This is extremely useful to detect the presence of the flame and the corresponding flame speed. The sensor is suitably located in the conduit leading the mixture of air gas to the burner or in the upper side of the burner.

The method can also comprise measuring the temperature value in the burner using preferably a thermocouple. The sensor is suitably located in the conduit leading the mixture of air gas to the burner or in the upper side of the burner.

To improve the safety of the gas boiler, the method can further comprise shutting off the boiler based on at least one of a predetermined value of the air to fuel gas ratio of the mixture, a predetermined temperature value in the combustion chamber, a predetermined detection of a flame signal in the burner, and/or a predetermined temperature value of the water in the boiler and/or domestic hot water. In fact, by measuring at least one of these values and by comparing the measured values with predetermined reference values, it is possible to determine whether a flashback or other risky conditions are occurring. The boiler is shut down to avoid risky situations and possible damages to the boiler. The method can shut the boiler down based on a single value of the above-mentioned parameters or by a combination of two or more values.

According to another aspect of the invention, a control unit is provided. The control unit can perform the method according to any one of the above-mentioned embodiments and aspects. The control unit is configured to manage the operating elements of a gas boiler to efficiently prevent the flashback in the boiler. A control mechanism can comprise the one or more actuators to regulate an air flow and/or a fuel gas flow and the control unit that is connected to said one or more actuators. The control mechanism can perform the inventive method.

According to a further aspect of the invention, a hydrogen gas boiler is provided. The gas boiler can comprise the control unit according to the above-mentioned aspect. The gas boiler is configured to efficiently prevent the flashback during a heat change demand.

Additionally, an advantageous embodiment is a computer program product comprising instructions which, when the program is executed by a computer or by a control unit, cause the computer or the control unit to perform the inventive method. Alternatively, an embodiment is a computer program product comprising instructions which cause that the hydrogen gas boiler carries out the inventive method. Furthermore, a data carrier is provided on which the computer program is stored and/or data carrier signal is provided which transmits the computer program.

In the figures, the subject-matter of the invention is schematically shown, wherein identical or similarly acting elements are usually provided with the same reference signs.
- Figure 1: shows a representation of the components of a gas boiler according to one embodiment,
- Figure 2: shows a flow chart of an inventive method according to one embodiment,
- Figure 3: shows a diagram showing a boiler water temperature curve, a fan speed curve and power curve of the boiler of a gas boiler dependent during a modulation operating modus,
- Figure 4: shows a representation of a diagram showing the variation of the air and fuel gas flow in a modulation operating modus

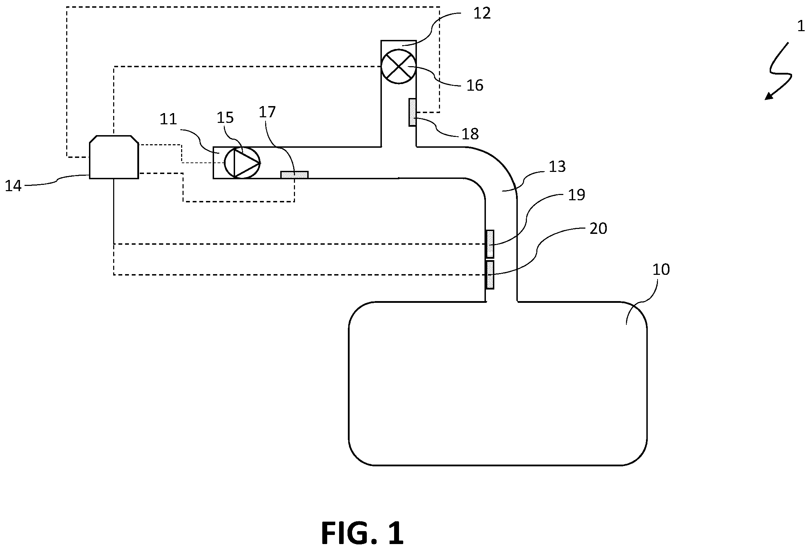

Figure 1 illustrates the components of a hydrogen gas boiler 1. The boiler 1 comprises a burner housing 10 in which a not-shown burner is arranged and a mixture supply channel 13 for supplying a combustible mixture to the burner 10. The burner housing 10 surrounds a combustion chamber.

The boiler 1 also comprises an air supply channel 11 including a fan element 15 (first actuator) for supplying air to the mixture supply channel 13 and a fuel gas supply channel 12 including a fuel gas valve 16 (second actuator) for supplying the fuel gas to the mixture supply channel 13. In order to measure the air flow and the fuel gas flow, the boiler 1 furthermore comprises an air flow sensor 17 located in the supply channel downstream the fan element 15 and a gas flow sensor 18 located in the supply channel downstream the gas valve 16. It is clear that said sensors are not strictly needed and/or further sensors can be used to measure or determine an air to fuel gas ratio. In addition, a temperature sensor (i.e. a thermocouple) 19 and a flame detection sensor 20, in particular a UV sensor, are provided to measure the burner's temperature and flame signal, respectively. These two sensors are located in the mixture supply channel 13 at the entrance of the burner housing 10. The boiler 1 also comprises a heat exchanger (not shown in the figure) for heating water, e.g. for central heating and/or to tap water heating. Additionally, the boiler 1 comprises a not shown flue through which the combusted gas leaves the burner housing.

A control unit 14 is electrically connected to the two actuators, i.e. the fan element 15 and the gas valve 16, the two flow sensors 17, 18 and the temperature and flame detection sensor 19, 20. The electrical connection between the control unit 14 and the other components is shown by dotted lines. The control unit 14 together with the fan element 15 and the gas valve 16 can form a control mechanism for controlling the operation of the gas boiler 1. The control mechanism can additionally comprise the two flow sensors 17, 18 and the temperature and flame detection sensor 19, 20.

Based on a heat change demand, the flow values can be measured by the air flow sensor 17 and gas flow sensor 18 and the control unit 14 can regulate the fan element 15 and the gas valve 16 of the boiler 1 in order to vary the air to fuel gas ratio in the mixture supply channel 13. In particular, the control unit 14 can modify the air to fuel gas ratio in the mixture supply channel 13 during the modulation operating modus of the boiler 1 such that the air to fuel gas ratio of the mixture during said modulation operating modus is set much higher than the air to fuel gas ratio of the mixture during a non-modulation operating modus. The temperature sensor 19 and the flame detection sensor 20 are used to control that no flashback is occurring at the entrance of the burner housing 10. Based on the measured values of the temperature sensor 19 and flame detection sensor 20, the control unit 14 can cause the operational interruption of the boiler 1, in case a risk situation of a flashback is going to occur.

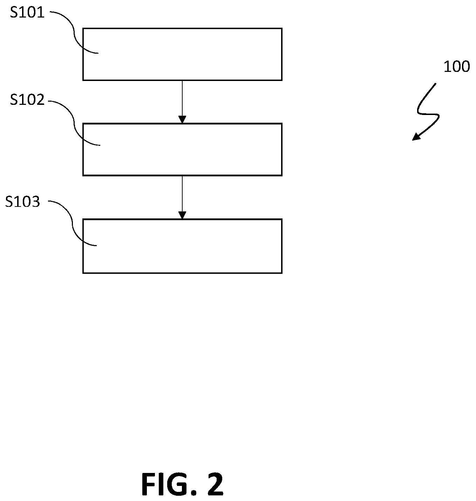

Figure 2 illustrates a flow chart of the method 100 for controlling the operation of a gas boiler 1. At step S101, a heat change demand is acquired, for example an increase or a reduction of the heat demand. As a consequence, a corresponding power variation of the boiler 1 is provided. At step S102, a switch into a modulation operating modus occurs as a result of the receipt of the heat change demand. Based on the variation in the heat demand, at step S103 at least one actuator of the boiler 1, the fan element 15 and/or the gas valve 16, is controlled to regulate the air flow and/or the fuel gas flow. The control of the actuators 15, 16 occurs in such a way that the air to fuel gas ratio is modified compared to the air to fuel gas ratio set during a non-modulation operating modus, when no heat change demand is acquired. The air to fuel gas ratio can be dependent on the load of the burner 10.

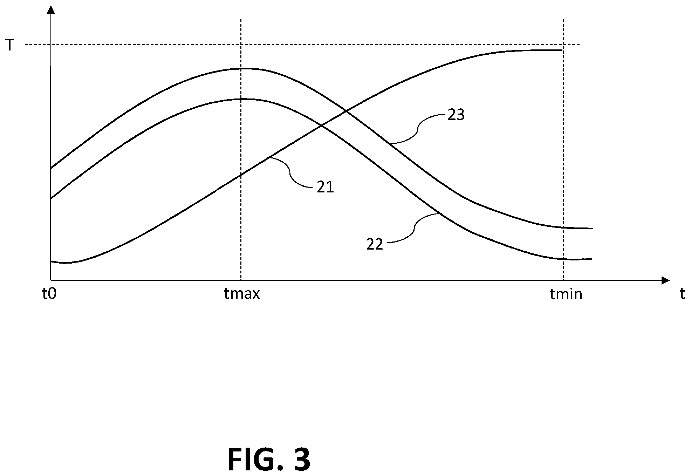

Figure 3 shows a diagram showing a water temperature curve, a fan speed curve and a power curve of the burner of the gas boiler during a modulation operating modus. At time to the control unit 14 acquires the heat demand change signal indicating that the boiler water temperature shall have a target temperature T. The target temperature T is shown as a horizontal line in fig. 3.

The control unit 14 switches into the modulation mode and ignites the burner at t0. Additionally, the power of the burner and the fan speed are increased to the time tmax at which the fan speed and the burner power have their maximum values. Afterwards the fan speed and the burner power are reduced. The boiler water temperature increases until it is close to the target temperature T. At the time tmin the boiler water temperature is close to the target Temperature T. From the time tmin, the fan speed and the burner power have a minimum value.

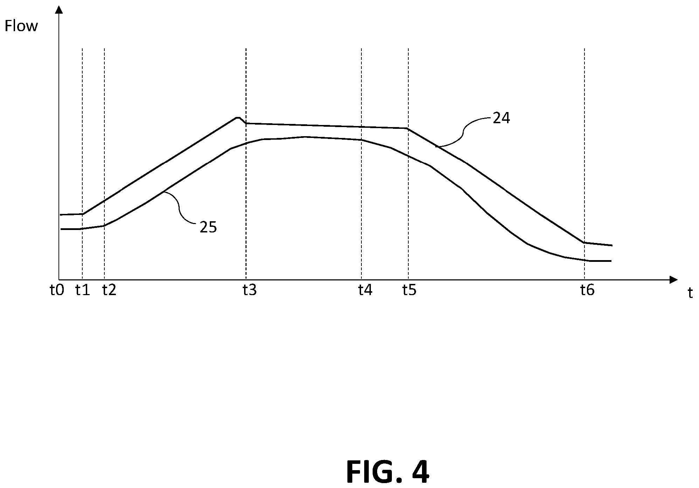

Figure 4 illustrates a diagram showing the variation of the air flow 24 and fuel gas flow 25 during a modulation operating modus as a function of time. The control of the air flow and the fuel gas flow is made during the modulation operating modus in which the boiler water temperature shall achieve the target temperature T shown in fig. 3.

As can be gathered from fig. 4 the air flow is higher than the fuel gas flow during the complete boiler operation. This means, the mixture comprising air and fuel gas provided to the burner 10 has a lambda greater than 1.

The boiler operation shown in fig. 4 differs from the boiler operation shown in fig. 3 in that in the time period to to t1 the boiler is firstly operated in a non-modulation operating modus. In said modus no heat change demand is acquired.

At time t1 the control unit 14 receives the heat demand change signal. At time t1 the control unit 14 acts on the actor 15 so that the fan speed increases. At time t2 the control unit 14 acts on the actor 16 so that the fuel gas increases. The modulation operating modus is finished at time t3. The period of time between t1 and t3 is the modulation period. At said time the boiler water temperature reached the target water temperature as it is shown in figure 3.

During the modulation operating modus between time t1 and t3, i.e., during the modulation period, lambda is increased with respect to the lambda present in the non-modulation modus between the times t0 and t1. In other words, if in non-modulation operation modus the air to fuel gas ratio is set to a predefined value, for example 1.5. In the modulation operating modus the air to fuel gas ratio is set to be higher than in the non-modulation operation. In particular, the air to fuel gas ratio in the modulation operation modus can be higher up to a predetermined value, in particular 40%, to the air to fuel gas ration of the non-modulation operation modus. As shown in the figure, when the heat input increases, there is an increase in the inlet air flow followed by an increase in the fuel gas flow.

The boiler 1 is in a non-modulation operating modus between the time t3 and t4. At time t4 the control unit 14 receives a heat demand change signal. In particular, the heat demand is reduced. In that case the control unit 14 reduces the gas flow at time t4. At time t5 the control unit reduces the fan speed. This control leads to that during the modulation operating modus between the time t5 and t6 the lambda is higher than the lambda during the non-modulation operating modus between the time t3 and t4. At time t6 the modulation operating modus is finished, i.e. the boiler water temperature reached the target temperature so that the control unit switches the operation of the boiler to the non-modulation operating modus. In this case, the modulation period is between t4 and t6.

### Reference Signs

- 1: gas boiler
- 10: burner
- 11: air supply channel
- 12: fuel gas supply channel
- 13: mixture supplying channel
- 14: control unit
- 15: fan element
- 16: gas valve
- 17: air flow sensor
- 18: gas flow sensor
- 19: temperature sensor
- 20: flame detection sensor
- 21: boiler water temperature curve
- 22: burner power curve
- 23: fan speed curve
- 24: air flow
- 25: fuel gas flow
- 100: method for controlling a gas boiler
- 200: control process during the modulation operating modus
- 300: modulation process

- T: Temperature
- t: Time

## Claims

1. Method (100) for controlling the operation of a hydrogen gas boiler (1), the method comprising:
acquiring (S101) a heat change demand;
switching (S102) the gas boiler (1) into a modulation operating modus due to the acquired heat change demand; and
controlling (S103) one or more actuators (15, 16) of the boiler (1) to regulate an air flow and/or a fuel gas flow, the fuel gas comprising at least 20 mol%, in particular 21 mol%, of hydrogen,
wherein controlling (S103) the one or more actuators (15, 16) is such that during the modulation operating modus an air to fuel gas ratio of a mixture is increased,
wherein, during the modulation operating modus, the value of the fuel gas flow is dependent on the value of the air flow according to a predefined function, and the quantity of air and the quantity of fuel gas change according to said predefined function.

2. Method (100) according to claim 1, **characterized in that** the method (100) comprises maintaining the value of the air to fuel gas ratio of the mixture unchanged, when no heat change demand is acquired.

3. Method (100) according to one of the claims 1 to 2, **characterized in that** the method comprises:
a. increasing the air to fuel gas ratio of the mixture when the heat demand increases or decreases, during the modulation operating modus; and/or
b. first, in particular progressively, increasing the air flow and then, in particular progressively, increasing the fuel gas flow, when the heat demand increases; and/or
c. first, in particular progressively, decreasing the fuel gas flow and then, in particular progressively, decreasing the air flow , when the heat demand decreases.

4. Method (100) according to one of the claims 1 to 3, **characterized in that**
a. the air to fuel gas ratio of the mixture is higher than 1; and/or **in that**
b. the method (100) comprises setting the air to fuel gas ratio of the mixture in the modulation operating modus, at a higher value compared to the air to fuel gas ratio of the mixture in the non-modulation operating modus.

5. Method (100) according to one of the claims 1 to 4, **characterized in that**
a. the modulation operating modus starts once an ignition of the boiler has occurred or during an ignition of the boiler (1), and/or **in that**
b. it is switched to the modulation operating modus starting from a non-modulation operating modus, in which no heat change demand is acquired.

6. Method (100) according to one of the claims 1 to 5, **characterized in that**
a. the actuators (15, 16) comprise at least a fan element (15); and/or **in that**
b. the air flow is regulated by varying the speed of the fan element (15); and/or **in that**
c. the method (100) comprises increasing the value of the air to fuel gas ratio of the mixture in the modulation operating modus by increasing or decreasing the speed of the fan element (15).

7. Method (100) according to one of the claims 1 to 6, **characterized in that**
a. at least one of the actuators (15, 16) comprises at least a gas valve (16); and/or **in that**
b. the fuel gas flow is regulated by acting on the gas valve (16); and/or **in that**
c. the gas valve (16) is an electronic or electrical controlled valve; and/or **in that**
d. the method (100) comprises increasing the value of the air to fuel gas ratio of the mixture in the modulation operating modus by reducing the fuel gas flow.

8. Method (100) according to one of the claims 1 to 7, **characterized in that**
a. the method (100) further comprises measuring the air flow and the fuel gas flow using an air gas flow sensor (17) and a fuel gas flow sensor (18), respectively and/or **in that**
b. the method (100) comprises measuring oxygen in the combustion chamber of the gas boiler (1) or in a flue gas and/or **in that**
c. the method (100) comprises measuring the thermal conductivity of a combusted gas, of an air flow and/or of a fuel gas flow and/or of a mixed gas and air flow;
d. the method (100) comprises measuring air to fuel gas ratio based on a UV sensor signal, preferably a UV signal intensity.

9. Method (100) according to one of the claims 1 to 8, **characterized in that**
a. the air flow and the fuel gas flow are regulated based on a stored flow diagram; and/or **in that**
b. the actuators (15, 16) of the boiler (1) are actuated based on a stored flow diagram; and/or **in that**
c. the method further comprises switching back to the non-modulation operating modus, when the values of the air flow and the fuel gas flow correspond to predetermined values, in particular expected values according to a stored flow diagram.

10. Method (100) according to one of the claims 1 to 9, **characterized in that** the heat demand during the modulation operating modus is based on boiler water temperature or domestic hot water.

11. Method (100) according to one of the claims 1 to 10, **characterized in that** the method (100) further comprises:
a. detecting a flame signal in a combustion chamber of the boiler (1), in particular, using preferably a UV sensor; and/or
b. measuring the temperature value in the burner (10), in particular, using preferably a thermocouple (19).

12. Method (100) according to one of the claims 1 to 11, **characterized in that** the method (100) further comprises shutting off the boiler (1) based on at least one of the following:
a. a predetermined value of the air to fuel gas ratio of the mixture; and/or
b. a predetermined temperature value in the burner (10); and/or
c. a predetermined detection of a flame signal in a combustion chamber of the gas boiler; and/or
d. a predetermined temperature value of the water in the boiler (1) and/or domestic hot water.

13. Hydrogen gas boiler (1) comprising one or more actuators (15, 16) to regulate an air flow and/or a fuel gas flow and a control unit (14) configured to perform the method (100) according to one of the claims 1 to 12, wherein the control unit (14) is connected to said one or more actuations (15,16).

14. Computer program product comprising instructions which, when the program is executed by a control unit cause the hydrogen gas boiler (1) according to claim 13 to carry out the method according to one of the claims 1 to 12.

## Patentansprüche

1. Verfahren (100) zur Steuerung des Betriebs eines Wasserstoffgaskessels (1), wobei das Verfahren Folgendes umfasst:
Erfassen (S101) eines Wärmeänderungsbedarfs;
Umschalten (S102) des Gaskessels (1) in einen Modulationsbetriebsmodus aufgrund des erfassten Wärmeänderungsbedarfs; und
Steuern (S103) eines oder mehrerer Stellantriebe (15, 16) des Kessels (1), um einen Luftstrom und/oder einen Brennstoffgasstrom zu regulieren, wobei das Brennstoffgas mindestens 20 Mol-%, insbesondere 21 Mol-%, Wasserstoff umfasst,
wobei das Steuern (S103) des einen oder der mehreren Stellantriebe (15, 16) so erfolgt, dass während des Modulationsbetriebsmodus ein Luft-Brennstoffgas-Verhältnis einer Mischung erhöht wird,
wobei während des Modulationsbetriebsmodus der Wert des Brennstoffgasstroms von dem Wert des Luftstroms gemäß einer vordefinierten Funktion abhängt und sich die Luftmenge und die Brennstoffgasmenge gemäß der vordefinierten Funktion ändert.

2. Verfahren (100) nach Anspruch 1, **dadurch gekennzeichnet, dass** das Verfahren (100) umfasst, den Wert des Luft-Brennstoffgas-Verhältnisses der Mischung unverändert aufrechtzuerhalten, wenn kein Wärmeänderungsbedarf erfasst wird.

3. Verfahren (100) nach einem der Ansprüche 1 bis 2, **dadurch gekennzeichnet, dass** das Verfahren Folgendes umfasst:
a. Erhöhen des Luft-Brennstoffgas-Verhältnisses der Mischung, wenn der Wärmebedarf während des Modulationsbetriebsmodus steigt oder sinkt; und/oder
b. zunächst, insbesondere schrittweise, Erhöhen des Luftstroms und dann, insbesondere schrittweise, Erhöhen des Brennstoffgasstroms, wenn der Wärmebedarf steigt; und/oder
c. zunächst, insbesondere schrittweise, Verringern des Brennstoffgasstroms und dann, insbesondere schrittweise, Verringern des Luftstroms, wenn der Wärmebedarf sinkt.

4. Verfahren (100) nach einem der Ansprüche 1 bis 3, **dadurch gekennzeichnet, dass**
a. das Luft-Brennstoffgas-Verhältnis der Mischung größer als 1 ist; und/oder dass
b. das Verfahren (100) umfasst, das Luft-Brennstoffgas-Verhältnis der Mischung im Modulationsbetriebsmodus auf einen höheren Wert einzustellen als das Luft-Brennstoffgas-Verhältnis der Mischung im Nicht-Modulationsbetriebsmodus.

5. Verfahren (100) nach einem der Ansprüche 1 bis 4, **dadurch gekennzeichnet, dass**
a. der Modulationsbetriebsmodus beginnt, sobald eine Zündung des Kessels erfolgt ist oder während einer Zündung des Kessels (1), und/oder dass
b. er aus einem Nicht-Modulationsbetriebsmodus, in dem kein Wärmeänderungsbedarf erfasst wird, in den Modulationsbetriebsmodus umgeschaltet wird.

6. Verfahren (100) nach einem der Ansprüche 1 bis 5, **dadurch gekennzeichnet, dass**
a. die Stellantriebe (15, 16) mindestens ein Lüfterelement (15) umfassen; und/oder dass
b. der Luftstrom durch Variieren der Drehzahl des Lüfterelements (15) geregelt wird; und/oder dass
c. das Verfahren (100) umfasst, den Wert des Luft-Brennstoffgas-Verhältnisses der Mischung im Modulationsbetriebsmodus durch Erhöhen oder Verringern der Drehzahl des Lüfterelements (15) zu erhöhen.

7. Verfahren (100) nach einem der Ansprüche 1 bis 6, **dadurch gekennzeichnet, dass**
a. mindestens einer der Stellantriebe (15, 16) mindestens ein Gasventil (16) umfasst; und/oder dass
b. der Brennstoffgasstrom durch Einwirken auf das Gasventil (16) geregelt wird; und/oder dass
c. das Gasventil (16) ein elektronisch oder elektrisch gesteuertes Ventil ist; und/oder dass
d. das Verfahren (100) umfasst, den Wert des Luft-Brennstoffgas-Verhältnisses der Mischung im Modulationsbetriebsmodus durch Verringern des Brennstoffgasstroms zu erhöhen.

8. Verfahren (100) nach einem der Ansprüche 1 bis 7, **dadurch gekennzeichnet, dass**
a. das Verfahren (100) ferner das Messen des Luftstroms und des Brennstoffgasstroms unter Verwendung eines Luftgasstromsensors (17) bzw. eines Brennstoffgasstromsensors (18) umfasst, und/oder dass
b. das Verfahren (100) das Messen von Sauerstoff in der Brennkammer des Gaskessels (1) oder in einem Rauchgas umfasst und/oder dass
c. das Verfahren (100) das Messen der Wärmeleitfähigkeit eines verbrannten Gases, eines Luftstroms und/oder eines Brennstoffgasstroms und/oder eines Mischgases und eines Luftstroms umfasst;
d. das Verfahren (100) das Messen des Luft-Brennstoffgas-Verhältnisses basierend auf einem UV-Sensorsignal, vorzugsweise einer UV-Signalintensität, umfasst.

9. Verfahren (100) nach einem der Ansprüche 1 bis 8, **dadurch gekennzeichnet, dass**
a. der Luftstrom und der Brennstoffgasstrom basierend auf einem gespeicherten Flussdiagramm geregelt werden; und/oder dass
b. die Stellantriebe (15, 16) des Kessels (1) basierend auf einem gespeicherten Flussdiagramm betätigt werden; und/oder dass
c. das Verfahren weiter umfasst, in den Nicht-Modulationsbetriebsmodus zurückzuschalten, wenn die Werte des Luftstroms und des Brennstoffgasstroms vorgegebenen Werten entsprechen, insbesondere erwarteten Werten gemäß einem gespeicherten Durchflussdiagramm.

10. Verfahren (100) nach einem der Ansprüche 1 bis 9, **dadurch gekennzeichnet, dass** der Wärmebedarf während des Modulationsbetriebsmodus basierend auf der Kesselwassertemperatur oder dem Warmwasser für den Hausgebrauch basiert.

11. Verfahren (100) nach einem der Ansprüche 1 bis 10, **dadurch gekennzeichnet, dass** das Verfahren (100) ferner Folgendes umfasst:
a. Erkennen eines Flammensignals in einer Brennkammer des Kessels (1), insbesondere unter Verwendung vorzugsweise eines UV-Sensors; und/oder
b. Messen des Temperaturwerts im Brenner (10), insbesondere unter Verwendung vorzugsweise eines Thermoelements (19).

12. Verfahren (100) nach einem der Ansprüche 1 bis 11, **dadurch gekennzeichnet, dass** das Verfahren (100) ferner das Abschalten des Kessels (1) basierend auf mindestens einem der folgenden Punkte umfasst:
a. einem vorbestimmten Wert des Luft-Brennstoffgas-Verhältnisses der Mischung;
und/oder
b. einem vorbestimmten Temperaturwert im Brenner (10); und/oder
c. einer vorbestimmten Erkennung eines Flammensignals in einer Brennkammer des Gaskessels; und/oder
d. einem vorbestimmten Temperaturwert des Wassers im Kessel (1) und/oder des Warmwassers für den Hausgebrauch.

13. Wasserstoffgaskessel (1), umfassend einen oder mehrere Stellantriebe (15, 16) zum Regulieren eines Luftstroms und/oder eines Brennstoffgasstroms und eine Steuereinheit (14), die so konfiguriert ist, dass sie das Verfahren (100) nach einem der Ansprüche 1 bis 12 ausführt, wobei die Steuereinheit (14) mit dem einen oder den mehreren Stellantrieben (15, 16) verbunden ist.

14. Computerprogrammprodukt, das Anweisungen umfasst, die, wenn das Programm von einer Steuereinheit ausgeführt wird, den Wasserstoffgaskessel (1) nach Anspruch 13 veranlassen, das Verfahren nach einem der Ansprüche 1 bis 12 auszuführen.

## Revendications

1. Procédé (100) de commande du fonctionnement d'une chaudière à gaz hydrogène (1), le procédé comprenant :
acquisition (S101) d'une demande de changement de chaleur ;
passage (S102) de la chaudière à gaz (1) en mode de fonctionnement de modulation en fonction de la demande de variation de chaleur acquise ; et
commande (S103) d'un ou plusieurs actionneurs (15, 16) de la chaudière (1) pour réguler un débit d'air et/ou un débit de gaz combustible, le gaz combustible comprenant au moins 20 % molaire, en particulier 21 % molaire, d'hydrogène,
dans lequel la commande (S103) du ou des actionneurs (15, 16) est telle que, pendant le mode de fonctionnement de modulation, le rapport air/gaz combustible d'un mélange est augmenté,
dans lequel, pendant le mode de fonctionnement de modulation, la valeur du débit de gaz combustible dépend de la valeur du débit d'air selon une fonction prédéfinie, et la quantité d'air et la quantité de gaz combustible changent selon ladite fonction prédéfinie.

2. Procédé (100) selon la revendication 1, **caractérisé en ce que** le procédé (100) comprend le maintien de la valeur du rapport air/gaz combustible du mélange inchangée, lorsqu'aucune demande de changement de chaleur n'est acquise.

3. Procédé (100) selon l'une des revendications 1 à 2, **caractérisé en ce que** le procédé comprend :
a. augmentation du rapport air/gaz combustible du mélange lorsque la demande de chaleur augmente ou diminue, pendant le mode de fonctionnement de modulation ; et/ou
b. tout d'abord, et notamment de manière progressive, augmentation du débit d'air, puis ensuite, et notamment de manière progressive, augmentation du débit de gaz combustible, lorsque la demande de chaleur augmente ; et/ou
c. tout d'abord, et notamment de manière progressive, diminution du débit de gaz combustible, puis, et notamment de manière progressive, diminution du débit d'air, lorsque la demande de chaleur diminue.

4. Procédé (100) selon l'une des revendications 1 à 3, **caractérisé en ce que**
a. le rapport air/gaz combustible du mélange est supérieur à 1 ; et/ou **en ce que**
b. le procédé (100) consiste à fixer le rapport air/gaz combustible du mélange dans le mode de fonctionnement de modulation, à une valeur plus élevée que le rapport air/gaz combustible du mélange dans le mode de fonctionnement sans modulation.

5. Procédé (100) selon l'une des revendications 1 à 4, **caractérisé en ce que**
a. le mode de fonctionnement de modulation démarre une fois que l'allumage de la chaudière a eu lieu ou pendant l'allumage de la chaudière (1), et/ou **en ce que**
b. il passe en mode de fonctionnement de modulation à partir d'un mode de fonctionnement sans modulation, dans lequel aucune demande de changement de chaleur n'est acquise.

6. Procédé (100) selon l'une des revendications 1 à 5, **caractérisé en ce que**
a. les actionneurs (15, 16) comprennent au moins un élément de ventilateur (15) ; et/ou **en ce que**
b. le débit d'air est régulé par variation de la vitesse de l'élément de ventilateur (15) ; et/ou **en ce que**
c. le procédé (100) consiste à augmenter la valeur du rapport air/gaz combustible du mélange dans le mode de fonctionnement de modulation en augmentant ou en diminuant la vitesse de l'élément de ventilateur (15).

7. Procédé (100) selon l'une des revendications 1 à 6, **caractérisé en ce que**
a. au moins un des actionneurs (15, 16) comprend au moins une vanne à gaz (16) ; et/ou **en ce que**
b. le débit de gaz combustible est régulé en agissant sur la vanne de gaz (16) ; et/ou **en ce que**
c. la vanne à gaz (16) est une vanne à commande électronique ou électrique ; et/ou **en ce que**
d. le procédé (100) consiste à augmenter la valeur du rapport air/gaz combustible du mélange dans le mode de fonctionnement de modulation en réduisant le débit de gaz combustible.

8. Procédé (100) selon l'une des revendications 1 à 7, **caractérisé en ce que**
a. le procédé (100) consiste à en outre mesurer le débit d'air et du débit de gaz combustible à l'aide d'un capteur de débit d'air (17) et d'un capteur de débit de gaz combustible (18), respectivement et/ou **en ce que**
b. le procédé (100) consiste à mesurer l'oxygène dans la chambre de combustion de la chaudière à gaz (1) ou dans les gaz de combustion et/ou **en ce que**
c. le procédé (100) consiste à mesurer la conductivité thermique d'un gaz de combustion, d'un débit d'air et/ou d'un débit de gaz combustible et/ou d'un débit de gaz et d'air mélangés ;
d. le procédé (100) consiste à mesurer le rapport air/gaz combustible sur la base d'un signal de capteur UV, de préférence une intensité de signal UV.

9. Procédé (100) selon l'une des revendications 1 à 8, **caractérisé en ce que**
a. le débit d'air et le débit de gaz combustible sont régulés en fonction d'un diagramme de flux enregistré ; et/ou **en ce que**
b. les actionneurs (15, 16) de la chaudière (1) sont actionnés en fonction d'un schéma de flux enregistré ; et/ou **en ce que**
c. le procédé consiste en outre à retourner au mode de fonctionnement sans modulation, lorsque les valeurs du débit d'air et du débit de gaz combustible correspondent à des valeurs prédéterminées, notamment aux valeurs attendues selon un diagramme de flux enregistré.

10. Procédé (100) selon l'une des revendications 1 à 9, **caractérisé en ce que** la demande de chaleur pendant le mode de fonctionnement de modulation est basée sur la température de l'eau de la chaudière ou sur l'eau chaude sanitaire.

11. Procédé (100) selon l'une des revendications 1 à 10, **caractérisé en ce que** le procédé (100) comprend en outre :
a. détection d'un signal de flamme dans une chambre de combustion de la chaudière (1), notamment à l'aide de préférence d'un capteur UV ; et/ou
b. mesure de la valeur de température dans le brûleur (10), en particulier, à l'aide, de préférence, d'un thermocouple (19).

12. Procédé (100) selon l'une des revendications 1 à 11, **caractérisé en ce que** le procédé (100) consiste en outre à arrêter la chaudière (1) sur la base d'au moins un des éléments suivants :
a. une valeur prédéterminée du rapport air/combustible du mélange ; et/ou
b. une valeur de température prédéterminée dans le brûleur (10) ; et/ou
c. une détection prédéterminée d'un signal de flamme dans une chambre de combustion de la chaudière à gaz ; et/ou
d. une valeur de température prédéterminée de l'eau dans la chaudière (1) et/ou de l'eau chaude sanitaire.

13. Chaudière à gaz hydrogène (1) comprenant un ou plusieurs actionneurs (15, 16) pour réguler un débit d'air et/ou un débit de gaz combustible et une unité de commande (14) configurée pour exécuter le procédé (100) selon l'une des revendications 1 à 12, l'unité de commande (14) étant connectée au(x)dit(s) actionneur(s) (15, 16).

14. Produit programme informatique comprenant des instructions qui, lorsque le programme est exécuté par une unité de commande, amènent la chaudière à gaz hydrogène (1) selon la revendication 13 à mettre en œuvre le procédé selon l'une des revendications 1 à 12.
